# EUROPEAN PATENT APPLICATION

(11) **EP 3 361 451 A1**
(43) Date of publication of application: **15.08.2018**
(21) Application number: 17155731.7
(22) Date of filing: 10.02.2017
(51) Int. Cl.: G07C 9/00, H04L 29/06, H04W 12/00

(54) **SAFETY LOCK FOR RESTRICTING ACCESS TO TECHNICAL DEVICES**

(71) Applicant: Vestel Elektronik Sanayi ve Ticaret A.S., 45030 Manisa (TR)
(72) Inventor: ÖZBAY, Mustafa Caner, 45030 Manisa (TR); ARDALI, Emre, 45030 Manisa (TR)
(74) Representative: Ascherl, Andreas

(57) **Abstract**

In summary, the invention describes a system comprising a stationary restricted device (1) the use of which is restricted depending on a restriction status of said restricted device, network means for connecting said restricted device (1) to a predefined wireless network, and a key device (3) separate from said restricted device and comprising connecting means for connecting said key device to said wireless network such that a connection status of said key device is detectable via said wireless network, wherein said restricted device comprises restriction management means (4) configured to detect via said wireless network the connection status of said key device and to update said restriction status depending on the detected connection status so that the restricted device can change its status from locked to unlocked.

## Description

The present invention relates to a safety lock for restricting access to technical devices, in particular home appliances that may be potentially dangerous if improperly operated for example by minors or elderly suffering from insufficiencies such as for example dementia.

### Background of the Invention

Many devices are potentially harmful if activated by people unauthorized, untrained or otherwise unfit to properly operate the respective device. For example home appliances such as stoves and ovens may pose a considerable risk if operated by playing minors or people suffering from insufficiencies such as for example dementia, who may activate the appliance and leave it unattended thereafter. But also industrial tools like a band-saw or specific emergency facilities that require operation by trained personnel may inflict severe injuries to unauthorized users.

Further, not only the untrained user may be in danger, but also may devices be damaged if improperly operated. For example, washing machines or dish washers may require a stopcock to be opened before being switched on, wherein failing to do so can cause pump damage. Likewise, in some households the end of a waste tube of a washing machine has to be placed into a sink or drain before activating the machine in order to avoid water being discharged to the floor causing floor damages.

Accordingly, there is a general need to restrict use of certain devices to authorized users only. Hereinafter, any device the use of which requires restriction is referred to as a restricted device. Conventionally, restriction of use is achieved for example by locking the room, in which the restricted device is located, with a mechanical lock, by providing the respective device itself with mechanical locks or barriers like covers that are difficult to remove for children, or by attempting to leave no unauthorized person unattended near a potentially harmful device.

Conventional means for restricting use of home appliances and other potentially harmful devices are often linked with shortcomings. When leaving a restricted device, authorized users may have to lock the device or the room where the device is located. This may be forgotten at times or found inconvenient tempting an authorized user to leave a restricted device in an unrestricted state inadvertently allowing unauthorized people to use the restricted device while unattended. Further, unlocking a restricted device or the room where the device is located before use may also be found inconvenient.

In recent years, more and more home appliances have been designed as smart appliances with complex electronic control units and improved communication capabilities via touch screens or even via local networks. While often facilitating use of home appliances, smart functions, touch screen operations and the like may constitute a temptation for minors to "play" with respective appliances.

Some electronic devices have child lock button combinations allowing parents to lock or unlock the device manually. However, such procedures may be found cumbersome for the parents, and children may inadvertently learn how to unlock the child lock.

It is therefore an object of the present invention to facilitate access to a restricted device for authorized users while reducing the risk of a restricted device being improperly operated by an unattended person not authorized to use the restricted device.

In view of the above, according to one aspect of the present invention, there is provided a system which comprises
a stationary restricted device the use of which is restricted depending on a restriction status of the restricted device,
network means for connecting the restricted device to a wireless network,
at least one key device separate from the restricted device and comprising connecting means for connecting the key device to the wireless network such that a connection status of the key device is detectable via the wireless network,
wherein the restricted device comprises restriction management means configured to detect via the wireless network the connection status of the key device and to update the restriction status depending on the detected connection status.

The wireless network may be of any type known such as infrastructure based networks, for example based on a central router, or IEEE 802.11 based wireless local area networks or peer to peer networks using for example Bluetooth, Zigbee or any other wireless network type suitable for detecting whether a device that can be used as a key device is connected thereto.

Needless to say that one restricted device may be associated with two or more key devices in order to allow a plurality of authorized users to use the device without having to pass the key device from one person to another. Likewise, one key device may be associated with one or more restricted devices so that a person authorized to use a plurality of restricted devices does not need to carry several key devices. For example, adults may hold a key device for unlocking all home appliances in their home at the same time and locking all home appliances simultaneously when leaving an infant unattended.

The key device, hereinafter also referred to as "smart key", may be any device presence of which is detectable in the wireless network in accordance with a connection status of the key device relative to the wireless network. It can be implemented as a software application on a WLAN enabled device, such as a smartphone, an electronics circuit with network capabilities etc. Typically, the smart key is implemented in a form that can be conveniently carried by the authorized person, e.g. a key chain, a smartphone, a necklace, a ring, a watch, a credit card sized transmitter/receiver to be inserted in a wallet etc. and may automatically connect with the network with the authorized person entering the range of the wireless network.

According to one advantageous embodiment, the connection status indicates, whether the key device is logged into the wireless network, and the restriction management means are configured to set the restriction status to unrestrict use of the restricted device only while the key device is logged into the wireless network and to restrict use of the restricted device, while the key device is not logged into said wireless network.

Accordingly, it can be determined whether the key device is located within a pre-defined area nearby the restricted device or not. If the key device is not within a predefined local network area, one or more restricted devices associated with the key device can be locked or disabled. For example, a home appliance may thus be unlocked once a family member carrying the key device arrives at home and may be automatically locked when the family member carrying the key device leaves home.

Preferably, the connection status is indicative of at least one signal property of a signal connecting the key device to the wireless network, such as received signal strength (RSSI) or a signal to noise ratio (SNR), wherein the at least one signal property correlates to a distance and/or physical properties of a space between the key device and the restricted device. Wherein a predefined threshold is used which is stored in said restriction management means and which can be amended by the authorized person to adapt the distance and area of the predefined network as desired, for example by the parents. Therein, the restriction management means are configured to set the restriction status to unrestrict use of the restricted device only while the at least one signal property is within a respective target range of the respective signal property.

This allows to lock potentially harmful devices even while the smart key is logged onto the wireless network, as long as the key device is farther away than a pre-deteremined maximum distance or as long as the signal property indicates that the restricted device is not within line of sight from the position where the key device is currently located.

According to one advantageous embodiment, the system may comprise override means for manually setting the restriction status to restrict or unrestrict use of the restricted device. For example, if there are less key devices than people authorized to use restricted device, an authorized person may thus be enabled to unlock the restricted device anyway, though in a manner less convenient in order to still ensure safety. Likewise, override means may fit the needs of an adult intending to operate a home appliance while having left the key device elsewhere or while the key device is not functioning. The override means may be configured to allow setting the restriction status by manipulating a secured operator of the restricted device, for example by entering a password on a touch screen, by using a mechanical key or the like.

The override means may also be configured to allow setting the restriction status by manipulating the key device. This can be useful e.g. if an authorized first person intends to temporarily authorize a second person to use the restricted device while the first person is absent but does not wish to pass the key device to the second person, for example because the smart key is implemented as an app installed on the first person's smart phone. For example, a smart phone app may allow the user to enter a time span during which the override means installed in the restricted device allow use of the restricted device, whereas the override means restrict use once the time span has elapsed.

Further, override means configured to allow setting the restriction status by manipulating the key device can also be useful to enable the authorized person holding the key device to manually and remotely deactivate the device while the key device is logged into the wireless network. For example, a parent who is at home but has to concentrate on a task not allowing the parent to supervise an infant may lock home appliances manually in order to prevent the infant from getting into danger by playing with the home appliances.

According to another advantageous embodiment the restriction status can assume at least three different states including a restricted state, an unrestricted state and at least one partially restricted state. For example, an oven or stove may be configured
- to allow operation at comparatively low temperatures for keeping food warm only (partially restricted state) while an authorized person holding the key device is in the house but not in the same room as the oven or stove,
- to allow operation at high temperatures for heating food (unrestricted state) while the authorized person holding the key device is in the same room as the oven or stove, and
- to prohibit operation of the oven or stove while the authorized person holding the key device is not in the house.

According to the further embodiment the key device vibrates each time when the authorized person leaves the predefined network area so that for example a parent knows that from now on a child in the kitchen which for example defines the predefined network area can not activate a restricted device as for example an oven in an unauthorized and dangerous manner.

Generally, any of the embodiments described or options mentioned herein may be particularly advantageous depending on the actual conditions of application. Further, features of one embodiment may be combined with features of another embodiment as well as features known per se from the prior art as far as technically possible and unless indicated otherwise.

In the following, the invention and preferred embodiments thereof will be described in more detail by way of example. The accompanying drawings, which are schematic illustrations only, serve for a better understanding of the features of the present invention.

### Brief Description of the Drawings

Fig. 1 schematically shows an example of the general setup of a system according to the present invention.
Fig. 2 schematically shows an embodiment of a key device according to the present invention
Fig. 3 schematically shows another embodiment of a key device according to the present invention
Fig. 4 shows a flow diagram of an exemplary functional implementation of the present invention.

### Detailed Description

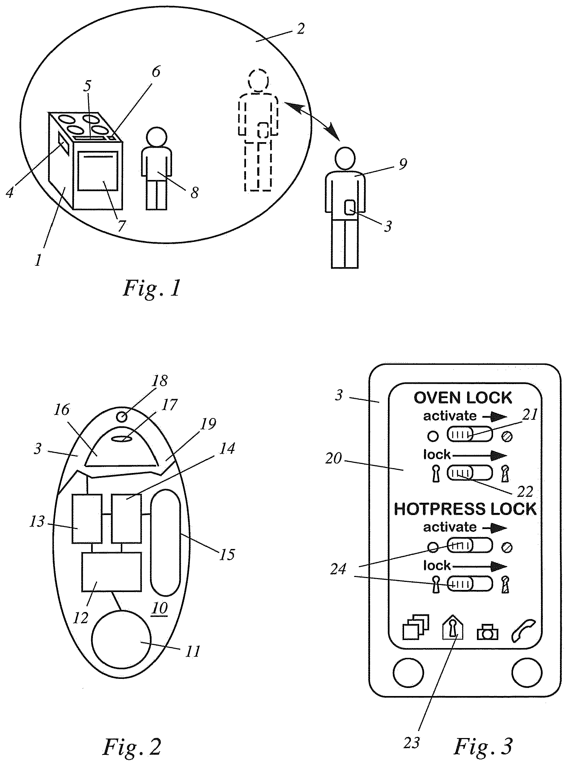

Fig. 1 illustrates the general concept of the present invention. The stove/oven combination 1 is protected as a restricted device 1 in the wireless network area 2 of a wireless network. This means that depending on a restriction state set in the controller 4, the controller 4 locks the operation field 5 thus blocking user manipulations on the operation field 5. Namely, if the restriction state is set to LOCKED, the operation field 5 is blocked not accepting user manipulations thereon, whereas, if the restriction state is set to UNLOCKED, the operation field 5 is not blocked and accepts user manipulations thereon, for example pushing a button to heat the oven. Optionally, the oven door 7 may also be locked depending on the restriction state set in the controller 4, i.e. cannot be opened while the restriction state is set to LOCKED. The override lock 6 is designed like a conventional mechanical lock or similar and allows to manually set the restriction state to LOCKED or UNLOCKED. The controller 4 further comprises network means connecting the controller 4 to the wireless network.

In application of the invention, the authorized person 9, e.g. a parent supervising an infant 8, keeps the key device (smart key) 3 with her. Once the authorized person leaves the predefined network area 2, the smart key 3 is also out of the range of the wireless network area 2, and vice versa. Via the network means, the controller 4 continuously checks the availability of the smart key 3 within the wireless network area 2, S1, in particular before activating any action of the restricted device. When the smart key 3 is within the network area 2, a device identification or other specific code identifying the smart key 3 is retrieved by the controller 4 via the wireless network to confirm presence of the smart key 3 within the wireless network area 2, S2. In addition to this authentication mechanism other signal related electrical parameters such as RSSI (Received Signal Strength Indication) or SNR (Signal to noise ratio) may be collected by the controller 4 to make sure that the authorized person 9 is actually within the line of sight or near by, i.e. to ensure that the parent may check visually if the infant 8 attempts to interact with the restricted device 1. If the authentication is successful, the controller 4 unlocks the restricted device 1 to allow user interaction S3. If the authorized person 9, and thus the smart key 3, is out of network area 2, the controller 4 locks the restricted device 1 prohibiting user interaction S4.

Fig. 2 shows a smart key 3 implemented as a dedicated device. The smart key is depicted in a partially broken away view, wherein the interior 10 of the smart key 3 is symbolized by a block diagram of its main components only. The battery 11 powers, through power management circuit 12, the microcontroller 13 which controls the network interface circuit 14 connected to the antenna 15. Via the network interface circuit 14, the microcontroller 13 periodically attempts to lock into the wireless network. Once the smart key 3 is located within the range of the wireless network area 2, the smart key 3 will authenticate as mentioned above and login will be successful thus allowing user manipulation of the operation field 5 of the restricted device 1.

The button switch 16 is connected to the microcontroller 13. By pushing the button switch 16, the microcontroller 13 is triggered to send, via the network interface circuit 14, an override signal to the controller 4 of the restricted device 1. The override signal causes the controller 4 to lock the restricted device 1 preventing it from being operated despite the smart key 3 being present within the network area 2. An indicator such as the LED 17 indicates that the restricted device 1 is locked. If the button switch 16 is pushed again, the microcontroller 13 is triggered to send, via the network interface circuit 14, an override release signal to the controller 4 of the restricted device 1. The override release signal causes the controller 4 to unlock lock the restricted device 1 allowing it to be operated as long as the smart key 3 is present within the network area 2.

A hole 18 in the housing 19 of the smart key 3 allows the authorized person 5 to attach the smart key 3 to a key ring (not shown) or the like.

Fig. 3 illustrates another embodiment of a smart key 3 according to the present invention. Therein, a smartphone with a smart key app installed thereon acts as the key device 3, making use of the wireless network functionality of the smartphone as conventionally known per se. By selecting the icon 23 on the touch screen 20, a setup screen of the smart key app is displayed on the touch screen 20. Therein a first touch screen operator 21 to set an activation state of the smart key 3. Only when activated, the smart key 3 will send an activation code required by the controller 4, in this embodiment, to unlock the restricted device 1. A second touch screen operator 22 can be provided to manually lock or unlock individual functions of the restricted device 1, for example the oven door 7 in Fig. 1. The smart key 3 can advantageously be configured to individually lock or unlock two or more home appliances and the setup screen may provide additional touch screen operators 24 for allowing to set respective individual activation states of the smart key 3 with respect to respective individual restricted devices 1.

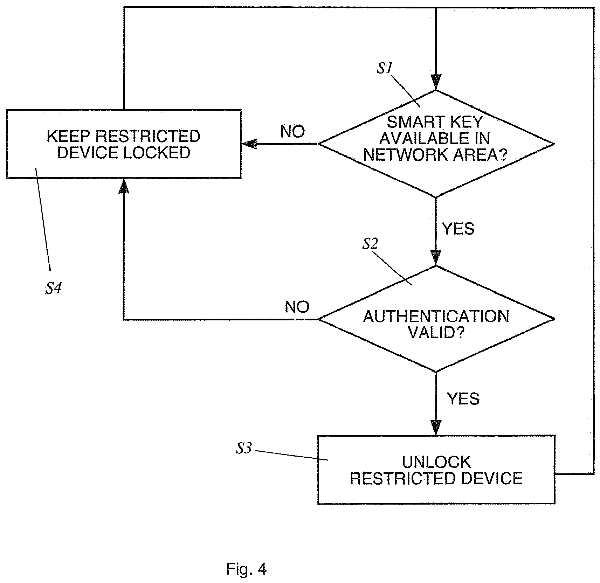

As can be taken from Fig. 4 the controller 4 continuously checks the availability of the smart key 3 within the wireless network area 2 at step S1. When the smart key 3 is within the network area 2, a device identification or other specific code identifying the smart key 3 is retrieved by the controller 4 via the wireless network to confirm presence of the smart key 3 within the wireless network area 2 at S2. If the authentication is successful, the controller 4 unlocks the restricted device 1 to allow user interaction according to step S3. If the authorized person 9, and thus the smart key 3, is out of network area 2, the controller 4 locks the restricted device 1 prohibiting user interaction according to step S4.

In a not shown embodiment, the smart key can also be integrated into a key chain, necklace, ring, watch, id card or other devices that can be carried by the authorized person as an alternative to a smart phone.

According to another embodiment which is not shown in the figures it is possible that a plurality of key devices are used, for example two smart phones of the father and the mother of a family, wherein at least one key device has to be within the predefined network area to unlock the restricted device.

In summary, the invention describes a system comprising a stationary restricted device 1 the use of which is restricted depending on a restriction status of said restricted device, network means for connecting said restricted device 1 to a predefined wireless network, and a key device 3 separate from said restricted device and comprising connecting means for connecting said key device to said wireless network such that a connection status of said key device is detectable via said wireless network, wherein said restricted device comprises restriction management means 4 configured to detect via said wireless network the connection status of said key device and to update said restriction status depending on the detected connection status so that the restricted device can change its status from locked to unlocked.

**Reference Numerals:**

| | | | |
|---|---|---|---|
| 1 | Restricted device | 14 | Network interface circuit |
| 2 | Wireless network area | 15 | Antenna |
| 3 | Key device | 16 | Button switch |
| 4 | Controller | 17 | LED |
| 5 | Operation field | 18 | Hole |
| 6 | Override lock | 19 | Smart key housing |
| 7 | Oven door | 20 | Touch screen |
| 8 | Infant | 21 | First touch screen operator |
| 9 | Authorized person | 22 | Second touch screen operator |
| 10 | Smart key interior | 23 | Icon |
| 11 | Battery | 24 | Further touch screen operators |
| 12 | Power management circuit | | |
| 13 | Microcontroller | | |

## Claims

1. A system comprising
a stationary restricted device (1) use of which is restricted depending on a restriction status of said restricted device,
network means for connecting said restricted device (1) to a predefined wireless network,
at least one key device (3) separate from said restricted device and comprising connecting means for connecting said key device to said wireless network such that a connection status of said key device is detectable via said wireless network, wherein
said restricted device comprises restriction management means (4) configured to detect via said wireless network the connection status of said key device and to update said restriction status depending on the detected connection status.

2. The system of claim 1, wherein the connection status indicates, whether said key device (3) is logged into said wireless network,
and said restriction management means (4) are configured to set the restriction status to unrestrict use of the restricted device only while said key device is logged into said wireless network and to restrict use of the restricted device, while said key device is not logged into said wireless network.

3. The system of claim 2, wherein the connection status is indicative of at least one signal property of a signal connecting the key device (3) to the wireless network,
said at least one signal property correlates to a distance and/or physical properties of a space between said key device and said restricted device,
and said restriction management means (4) are configured to set the restriction status to unrestrict use of the restricted device only while said at least one signal property is within a respective target range of said respective signal property.

4. The system of claim 3, wherein said at least one signal property includes at least one of a received signal strength and a signal to noise ratio wherein a predefined threshold is used which is stored in said restriction management means (4) and which can be amended by the authorized person (9).

5. A system according to any of the preceding claims comprising override means for manually setting the restriction status to restrict or unrestrict use of said restricted device.

6. The system according to claim 5 wherein said override means are configured to allow setting the restriction status by manipulating the key device.

7. A system according to claim 5 or claim 6, wherein said override means are configured to allow setting the restriction status by manipulating a secured operator of the restricted device.

8. A system according to any of the preceding claims, wherein said restriction status can assume at least three different states including a restricted state, an unrestricted state and at least one partially restricted state.

9. A system according to any of the preceding claims, wherein said restricted device is a home appliance

10. A system according to claim 9, wherein said restricted device is one of a stove, an oven, a combination of a stove and an oven, a cloth hot press, a dish washer or a washing machine.

11. A system according to any of the preceding claims, wherein said key device (3) is a smartphone or smartwatch on which a key device app is installed.

12. A system according to any of the preceding claims, wherein said key device (3) vibrates each time when the authorized person leaves the predefined network area.

13. A system according to any of the preceding claims where in a plurality of key devices (3) are used and wherein the connection status of at least one key device has to be detected within the predefined wireless network to set the restriction status to unrestricted use of the restricted device.
